# EUROPEAN PATENT APPLICATION

(11) **EP 3 711 949 A1**
(43) Date of publication of application: **23.09.2020**
(21) Application number: 19163834.5
(22) Date of filing: 19.03.2019
(51) Int. Cl.: B33Y 10/00, B29C 64/106, B29C 64/118, B29C 70/58, B29C 70/88, B33Y 30/00, B33Y 70/00, H01F 1/08, H01F 7/02, H01F 41/02, H01F 41/14

(54) **METHOD AND APPARATUS FOR MANUFACTURING A MAGNETIC STRUCTURE**

(71) Applicant: University of Vienna, 1010 Vienna (AT)
(72) Inventor: The designation of the inventor has not yet been filed
(74) Representative: J A Kemp LLP

(57) **Abstract**

Methods and apparatus (1) for manufacturing a magnetic structure (5) are disclosed. In one arrangement, a method comprises driving magnetic material in a liquid state through an outlet (7) and onto a surface (9) in an additive manufacturing process in which the magnetic material solidifies on the surface (9) and progressively builds up the magnetic structure (5). A magnetic field is used to apply a selected magnetic alignment to each of plural portions of the magnetic material before the solidification of each portion of magnetic material, such that each portion of magnetic material solidifies with a respective selected magnetic alignment.
The magnetic field is varied in direction or strength during the driving of the magnetic material through the outlet to apply corresponding different selected magnetic alignments to different portions of the magnetic material.

## Description

The present invention relates to manufacturing a magnetic structure using an additive manufacturing process.

It is known to use additive manufacturing to manufacture objects from magnetic material. For example, the following publications describe 3D printing of polymer bonded magnets: Huber, C., et al. "3D print of polymer bonded rare-earth magnets, and 3D magnetic field scanning with an end-user 3D printer" Applied Physics Letters 109.16 (2016): 162401, and LI, Ling, et al. "Big area additive manufacturing of high performance bonded NdFeB magnets" Scientific reports, 2016, 6. Jg., S. 36212.

US5121329A discloses a 3D printing process involving formation of a structure containing magnetic particles.

The above methods allow magnetic structures to be formed in different shapes with high efficiency but are not suitable for producing magnetic structures in which the orientation of a magnetic property varies in a complex manner as a function of position through the structure.

US 2017/0092400 A1 describes additive manufacturing processes in which stereolithography or laser sintering is used to align anisotropically bonded magnetic material in a magnetic structure. These processes allow objects to be manufactured with more complex spatial distributions of magnetism, but require sophisticated and expensive equipment.

It is an object of the invention to provide an alternative approach for manufacturing a magnetic structure in which one or more of the above issues is at least partially addressed.

According to an aspect of the invention, there is provided a method of manufacturing a magnetic structure, comprising: driving magnetic material in a liquid state through an outlet and onto a surface in an additive manufacturing process in which the magnetic material solidifies on the surface and progressively builds up the magnetic structure; and using a magnetic field to apply a selected magnetic alignment to each of plural portions of the magnetic material before the solidification of each portion of magnetic material, such that each portion of magnetic material solidifies with a respective selected magnetic alignment, wherein: the magnetic field is varied in direction or strength during the driving of the magnetic material through the outlet to apply corresponding different selected magnetic alignments to different portions of the magnetic material.

Applying the magnetic field to the magnetic material in the liquid state allows a magnetic component of the magnetic material (e.g. magnetic particles) to be aligned by the magnetic field. Combining the controllability of the magnetic field (e.g. variable orientation) and the controllability of the additive manufacturing process enables magnetic structures to be formed with simultaneous flexible control over both the geometry of the magnetic structure and the local magnetic orientation of material within the magnetic structure. The approach can be implemented with minimal modification of existing additive manufacturing apparatus.

In an embodiment, the magnetic field comprises a pulsed magnetic field. Pulsed magnetic fields can be provided by a brief pulse of electric current through a coil. For a given size of coil, using a pulsed magnetic field allows higher field strengths to be applied without excessive Joule heating because the time between pulses allows some of the heat generated by the current to dissipate. This approach allows effective control of the magnetic alignment of the portions of magnetic material in a compact device.

In an embodiment, the magnetic field is generated such that the region of free space in which the magnetic field is present and large enough to apply the selected magnetic alignment has a largest linear dimension of less than 5mm. Providing a magnetic field that is highly focussed in a small volume reduces power requirements and facilitates provision of effective control of the magnetic alignment of the portions of magnetic material in a compact device.

In an embodiment, each portion of magnetic material is melted by heating before the portion of magnetic material is driven through the outlet; and the solidification of each portion of magnetic material occurs due to cooling of the portion of magnetic material.

The inventors have found that applying the approach to additive manufacturing processes of these type can be achieved particularly efficiently. For example, the alignment control mechanism may simply be attached (e.g. screwed on) to an existing nozzle of a fused deposition modelling (FDM) extruder. Thus, in an embodiment, the method comprises receiving the portions of magnetic material together as a filament before the portions of magnetic material are melted, the filament having a diameter less than 5mm and a length of more than 1m.

In an embodiment, the magnetic field used to apply the selected magnetic alignment is generated using a plurality of coils; each of the coils is configured to selectively contribute a magnetic field component to the magnetic field; at least two of the contributed magnetic field components are oriented differently relative to each other; and the selected magnetic alignment is changed between deposition of different portions of the magnetic material by changing relative strengths of the contributed magnetic field components.

Using plural coils in this manner makes it possible to reorient the magnetic field quickly and efficiently within needing any moving parts. This facilitates reliable manufacture of magnetic structures having complex spatial distributions of magnetic orientation at high speed.

In an embodiment, the selected magnetic alignment is changed between deposition of different portions of the magnetic material by changing the position of one or more permanent magnets relative to the alignment region.

This approach allows the magnetic field to be controlled using without requiring electronics to control driving of currents through coils. The approach also facilitates compactness.

According to an alternative aspect of the invention, there is provided an apparatus for manufacturing a magnetic structure, comprising: an ejection system configured to drive magnetic material in a liquid state through an outlet and onto a surface in an additive manufacturing process in which the magnetic material solidifies on the surface and progressively builds up the magnetic structure; and an alignment control system configured to using a magnetic field to apply a selected magnetic alignment to each of plural portions of the magnetic material before the solidification of each portion of magnetic material, such that each portion of magnetic material solidifies with a respective selected magnetic alignment, wherein: the alignment control system is configured such that the magnetic field is varied in direction or strength during the driving of the magnetic material through the outlet to apply corresponding different selected magnetic alignments to different portions of the magnetic material.

Embodiments of the invention will now be described, by way of example only, with reference to the accompanying drawings in which corresponding reference symbols indicate corresponding parts, and in which:
Figure 1 schematically depicts an apparatus for manufacturing a magnetic structure;
Figure 2 schematically depicts an alternative apparatus for manufacturing a magnetic structure;
Figure 3 is a graph showing anisotropic hysteresis in a magnetic structure formed using an embodiment;
Figure 4 is a perspective view of an alignment control system of an apparatus for manufacturing a magnetic structure;
Figure 5 is a top view of the alignment control system of Figure 4;
Figure 6 is a magnified view of an alignment region of the alignment control system of Figures 4 and 5;
Figure 7 is a side sectional view of the alignment control system of Figures 4-6 during a manufacturing process;
Figure 8 is a perspective view of an alternative alignment control system of an apparatus for manufacturing a magnetic structure;
Figure 9 is a side view of the alignment control system of Figure 8 during a manufacturing process;
Figure 10 is a perspective view of an example multi-layered magnetic structure; and
Figure 11 depicts example spatial distributions of magnetism in different layers of the magnetic structure of Figure 10.

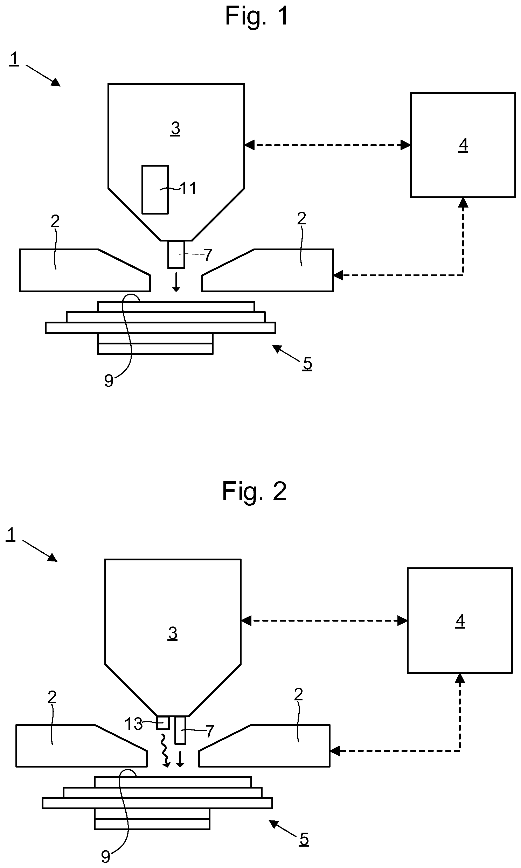

Figures 1 and 2 schematically depict example apparatuses 1 for manufacturing a magnetic structure 5. Each apparatus 1 comprises an ejection system 3. The ejection system 3 drives magnetic material in a liquid state through an outlet 7 and deposits the magnetic material onto a surface 9. The deposition of the magnetic material onto the surface 9 forms part of an additive manufacturing process in which the magnetic material solidifies on the surface shortly after contacting the surface. The magnetic structure 5 is progressively built up as newly deposited magnetic material fuses with previously deposited magnetic material forming the surface 9. The surface 9 thus evolves progressively as magnetic material is added.

Figure 1 is an example implementation in which the magnetic material is supplied to the apparatus 1 in the solid state (e.g. the magnetic material is a solid at room temperature before use). In a class of embodiments of this type, the magnetic material is received as a filament, the filament having a diameter of less than 5mm (optionally less than 2mm) and a length of more than 1m. A heating unit 11 in the ejection system 3 melts at least a component of the magnetic material before the magnetic material is driven through the outlet 7 in the liquid state. The subsequent solidification of the magnetic material in embodiments of this type occurs by cooling of the magnetic material. In an embodiment, the driving of the magnetic material through the outlet 7 comprises an extrusion process. In an embodiment, the additive manufacturing process comprises an extrusion deposition additive manufacturing process. Various compositions may be used to implement the magnetic material. In one class of embodiments, the magnetic material comprises a magnetic component (e.g. ferromagnetic or ferromagnetic) and a carrier medium (which is not necessarily magnetic). In such embodiments, at least the carrier medium is in the liquid state when the magnetic material is driven through the outlet 7. The carrier medium may comprise any of the various materials known for implementing extrusion deposition additive manufacturing processes, such as a polymer matrix. The carrier medium may, for example, comprise one or more of the following: a thermoplastic, a polymer, acrylonitrile butadiene styrene (ABS), polycarbonate (PC), polylactic acid (PLA), high-density polyethylene (HDPE), PC/ABS, polyphenylsulfone (PPSU), and high impact polystyrene (HIPS). The extrusion deposition additive manufacturing process may comprise fused deposition modelling (FDM), also referred to as fused filament fabrication (FFF). In an embodiment, the polymer matrix is heated so as to reach a temperature that is more than 10°C, optionally more than 15°C, optionally more than 20°C, above a glass transition temperature of the polymer matrix. Heating in this manner has been found to allow efficient control of the alignment of the magnetic component in the polymer matrix (as described below).

Figure 2 is an example implementation in which the magnetic material is supplied to the apparatus 1 in a liquid state (e.g. at least a component of the magnetic material, such as a carrier medium, is liquid at room temperature prior to use). An irradiation unit 13, which is provided as part of the ejection system 3 in the embodiment shown, irradiates the magnetic material as the magnetic material is deposited on the surface 9. The magnetic material comprises a photosensitive liquid. The irradiation of the magnetic material cures the magnetic material quickly. The curing of the magnetic material causes the magnetic material to solidify. In an embodiment, the additive manufacturing process comprises a light polymerized additive manufacturing process. The magnetic material may comprise magnetic particles in a carrier medium and the carrier medium may comprise any of the various known materials used in light polymerized additive manufacturing processes. The carrier medium may, for example, comprise a photopolymer. The irradiation unit 13 may take any of various forms as long as the appropriate wavelength and intensity of radiation is directed onto the magnetic material at the appropriate time and location. In one embodiment, the irradiation unit 13 comprises a UV lamp. In another embodiment, the irradiation unit 13 comprises a laser.

The magnetic material comprises a magnetic component. As described above, in some embodiments, the magnetic material comprises a carrier medium which is not necessarily magnetic and a magnetic component (e.g. magnetic particles). The magnetic component may comprise any material which is capable of sustaining a persistent magnetized state, such as a ferromagnet or ferrimagnet. In an embodiment, the magnetic component comprises particles having a saturation magnetization larger than 0.1 Tesla. The magnetic component may, for example, comprise a ferrite. In an embodiment, the magnetic component comprises one or more of the following: BaFeO, NdFeB, FtPt, NdDyFeB, NdNbFeB, NdPrCeFeB, NdPrCeFeZrB, SmCo, Alnico (a family of iron alloys comprising Al, Ni and Co, whence the name, in addition to other elements), and SmFeN. In an embodiment, the magnetic component additionally or alternatively comprises an exchange spring structure, where a magnetic hard phase is exchange coupled to a magnetic softer phase such as NdFeB/Fe3B or NdFeB/Fe.

In an embodiment, the magnetic component comprises a material that is magnetically anisotropic. In an embodiment, the magnetic anisotropy is such that the remanence of the material along the soft axis is larger by at least a factor of two than the remanence of the material along the hard axis, wherein the remanence is defined as the magnetization remaining in zero field after a large magnetic field is applied (enough to achieve saturation). Examples of magnetically anisotropic material are Ba-ferrite particles, NdFeB material produced by Hydrogen decrepitation deabsorbation recombination (HDDR) and optionally after it has been jet milled, NdFeB produced by jet milling, and anisotropic SmFeN. These examples show materials where the mechanically separated magnetic particles exhibit an magnetic easy axis. Each of these particles may consists of multiple magnetic grains that may be exchange coupled or may have broken exchange coupling.

In one class of embodiment, of which Figures 1 and 2 are both examples, the apparatus 1 further comprises an alignment control system 2. The alignment control system 2 is configured to use a magnetic field during the deposition of the magnetic material to apply a selected magnetic alignment to the magnetic material. The selected magnetic alignment is applied independently to each of plural portions of the magnetic material. The selected magnetic alignment may be achieved by causing magnetic particles in the magnetic material to align their easy axes with the applied magnetic field. The selected magnetic alignment is applied to each portion while the portion is in the liquid state (before the portion solidifies). Each portion of magnetic material solidifies with a respective magnetic alignment corresponding to the selected magnetic alignment applied to that portion of the magnetic material. The magnetic field is varied in direction or strength during the driving of the magnetic material through the outlet to apply corresponding different selected magnetic alignments to different portions of the magnetic material. The respective selected magnetic alignment is thus different for two or more of the plural portions of the magnetic material. Thus, for example, when the additive manufacturing process uses FDM/FFF, with the magnetic material being provided to the ejection system 3 as a continuous filament of thermoplastic material (e.g. with magnetic particles embedded in a solid thermoplastic carrier medium), different selected magnetic alignments may be applied to portions of the magnetic material at different longitudinal positions along the filament (as the filament passes through the ejection head). Different portions of the magnetic material will correspond to different positions within the magnetic structure by the nature of the additive manufacturing process. The independent control of the magnetic alignment thus allows a magnetic structure to be built up within which magnetic particles are aligned in different directions as a function of position within the magnetic structure.

In embodiments of the type depicted in Figure 1, each portion of magnetic material is melted by heating before the portion of magnetic material is driven through the outlet 7. The solidification of each portion of magnetic material occurs due to cooling of the portion of magnetic material. The selected magnetic alignment is applied to each portion after the portion has melted and before the portion has solidified again.

In embodiments of the type depicted in Figure 2, the magnetic material comprises a photosensitive liquid at room temperature and the solidification of each portion of magnetic material is driven by irradiation by electromagnetic radiation. The selected magnetic alignment is applied to each portion before the irradiation step.

In each of the embodiments of Figures 1 and 2, a controller 4 is provided for controlling operation of the ejection system 3 and the alignment control system 2. The controller 4 may control as a function of time movement of the outlet 7 relative to the magnetic structure 5 being formed and a flow rate of magnetic material out of the outlet 7 (to define the shape of the magnetic structure 5 being formed), as well as the selected magnetic alignment applied to each portion of magnetic material leaving the outlet 7 (to define the spatial distribution of magnetic alignment within the magnetic structure 5 being formed).

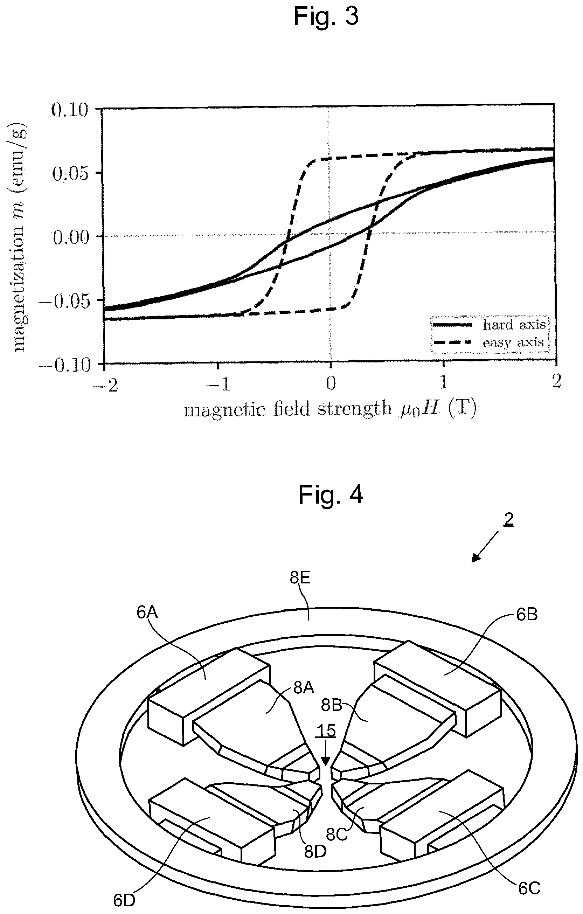

Figure 3 is a graph showing measured magnetic anisotropy in a magnetic structure formed using an embodiment of the present disclosure. The horizontal axis represents the strength of an applied magnetic field. The vertical axis represents a measured magnetization. The additive manufacturing process in this example used FDM/FFF, with a magnetic field being applied consistently along one direction during the deposition process. A cubic magnetic structure having a size of 5 × 5 × 5mm³ was formed. The magnetic material comprised a PA12 polymer matrix and magnetically anisotropic Strontium ferrite particles with a filler content of 85 wt.%. Hysteresis measurements were carried out with a vibrating sample magnetometer (VSM). VSM measurements were performed along an easy axis (broken line curves) parallel to the applied magnetic field used to align the magnetic material during the deposition and parallel to a hard axis (solid line curves) orthogonal to the easy axis. The resulting curves show the magnetic anisotropy of the printed magnetic structure. A minimum magnetic flux density of B = 200 mT was necessary to align magnetic particles in the magnetic material with the applied magnetic field in this example implementation.

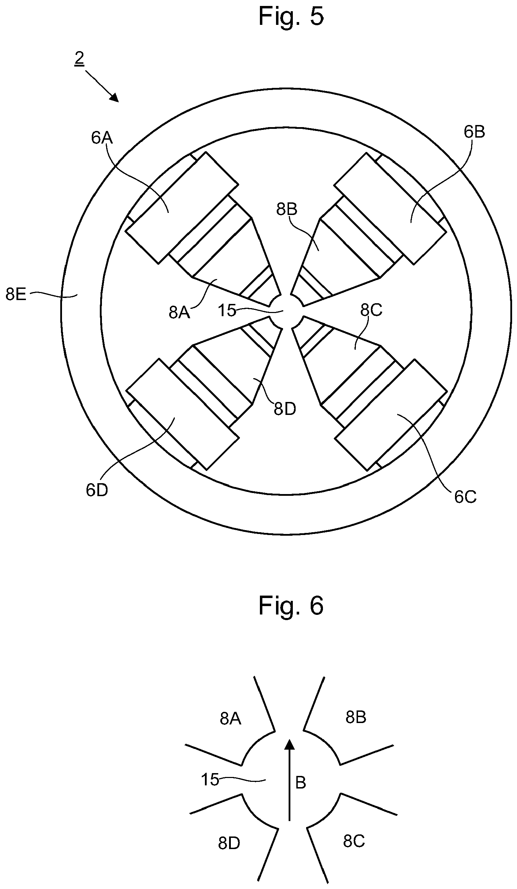

Figures 4-6 depict in further detail an example implementation of the alignment control system 2. In embodiments of this type, the alignment system comprises a plurality of coils 6A-6D. Each of the coils 6A-6D is drivable (i.e. by driving an electrical current through the coil using an external power source such as a current source) independently of the other coils 6A-6D. The size of a current within each coil 6A-6D can thus be selected independently of the current in the other coils 6A-6D. Each of the coils 6A-6D is configured to contribute a magnetic field component to a magnetic field B used to apply the selected magnetic alignment to each portion of the magnetic material. The selected magnetic alignment is changed between deposition of different portions of the magnetic material by changing relative strengths of the contributed magnetic field components. Thus, for example, a net magnetic field oriented as shown in Figure 6 could be achieved by driving coils 6A-6D with equal current (in the appropriate sense). In embodiments where the alignment system comprises one or more coils, the magnetic field may be implemented as a pulsed magnetic field. Joule heating caused by current in the coils may thus dissipate between pulses, thereby allowing higher magnetic fields to be achieved without excessive overall heating.

In the embodiment shown, each coil 6A-6D interacts with a magnetic core 8A-8E (e.g. by being wound around a portion of the magnetic core 8A-8E and having an electrical current driven through the coil 6A-6D to generate a magnetic flux within the magnetic core 8A-8E). The magnetic core 8A-8E directs magnetic flux generated by the coil 6A-6D through a common alignment region 15. The selected magnetic alignment is applied to each portion of magnetic material as the portion of magnetic material passes through the common alignment region 15. At least two of the magnetic cores 8A-8E are separated from each other across the common alignment region 15 by less than 5mm, optionally by less than 4mm, optionally by less than 3mm, optionally by less than 2mm, optionally by less than 1mm. This embodiment is an example of a larger class of embodiment in which the magnetic field is generated such that the region of free space in which the magnetic field is present and large enough to apply the selected magnetic alignment has a largest linear dimension of less than 5mm, optionally less than 4mm, optionally less than 3mm, optionally less than 2mm, optionally less than 1mm. The magnetic core 8A-8E form magnetic circuits driven by the respective coils 6A-6D, the magnetic circuits passing through the common alignment region 15. The magnetic core 8A-8E can be formed from any material having suitably high magnetic permeability, such as a ferromagnetic or ferrimagnetic material. The magnetic field B in the common alignment region 15 should be large enough to align the magnetic material.

In the embodiment shown, four coils 6A-6D are provided. In other embodiments, fewer than four coils or more than four coils may be used. In the embodiment shown, each coil 6A-6D is mounted on a different respective core arm 8A-8D forming part of the magnetic core 8A-8E (coil 6A is mounted on core arm 8A, coil 6B is mounted on core arm 8B, coil 6C is mounted on core arm 8C, and coil 6D is mounted on core arm 8D). In the embodiment shown, each core arm 8A-8D is oriented radially relative to an axis passing through the common alignment region 15 (perpendicular to the page in the orientation of Figure 5). A core ring 8E is provided to complete the respective magnetic circuits formed by the magnetic core 8A-8E. The core ring 8E is connecting to a radially outermost edge of each of the core arms 8A-8D.

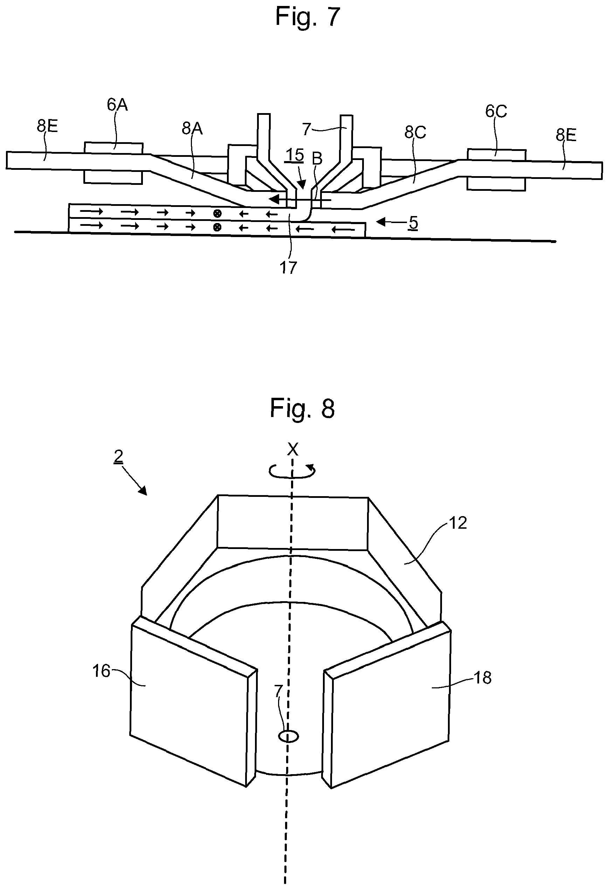

Figure 7 is a schematic side sectional view depicting operation of an apparatus for manufacturing a magnetic structure 5 of the type depicted in Figure 1 and using an alignment control system 2 of the type described above with reference to Figures 4-6. Portions of magnetic material 17 are driven from outlet 7 in liquid form while the outlet 7 is moved relative to the magnetic structure 5 being formed (by physically moving the outlet 7, the magnetic structure 5, or both). In this embodiment, the selected magnetic alignment is applied to each portion of the magnetic material as the portion of magnetic material passes through an alignment region 15, and the applied magnetic field B is substantially perpendicular (horizontal in the orientation of Figure 7) to a direction of travel of the portion of magnetic material through the alignment region 15 (downwards in the orientation of Figure 7). In embodiments of this type, the selected magnetic alignment may be changed between deposition of different portions of the magnetic material by changing an orientation of the applied magnetic field between different orientations perpendicular to the direction of travel of each portion of the magnetic material through the alignment region 15. An example spatial variation in the magnetic orientation within the magnetic structure 5 is indicated by the arrows within the magnetic structure 5.

Figure 8 depicts an alternative implementation of the alignment control system 2. This implementation is an example of an embodiment in which the selected magnetic alignment is changed between deposition of different portions of the magnetic material by changing the position of one or more permanent magnets 16, 18 relative to the alignment region 15. In the particular example shown, two permanent magnets 16 and 18 are provided. In other embodiments, more than two permanent magnets may be used. In an embodiment, at least two of the permanent magnets are separated from each other across the alignment region 15 by less than 5mm, optionally by less than 4mm, optionally by less than 3mm, optionally by less than 2mm, optionally by less than 1mm. The permanent magnets are mounted on a rotatable assembly 12. The changing of the position of the permanent magnets relative to the alignment region 15 is performed in this embodiment by rotating the rotatable assembly 12 about a vertical axis X passing through the outlet 7. The permanent magnets should have a relatively high Curie temperature so that any heating of the magnetic material does not cause the permanent magnets to be heated above the Curie temperature.

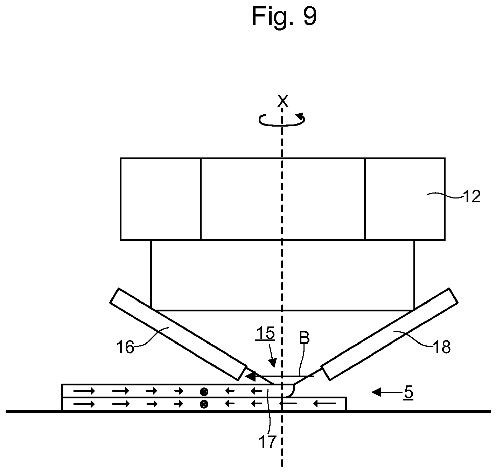

Figure 9 is a schematic side view depicting operation of an apparatus for manufacturing a magnetic structure 5 of the type depicted in Figure 1 using an alignment control system of the type described above with reference to Figure 8. Portions of magnetic material 17 are driven from outlet 7 in liquid form while the outlet 7 is moved relative to the magnetic structure 5 being formed (by physically moving the outlet 7, the magnetic structure 5, or both). In this embodiment, the selected magnetic alignment is applied to each portion of the magnetic material as the portion of magnetic material passes through an alignment region 15. In embodiments of this type, the selected magnetic alignment may be changed between deposition of different portions of the magnetic material by rotating the rotatable assembly 12 about a vertical axis X passing through the outlet 7. An example spatial variation in the magnetic orientation within the magnetic structure 5 is indicated by the arrows within the magnetic structure 5.

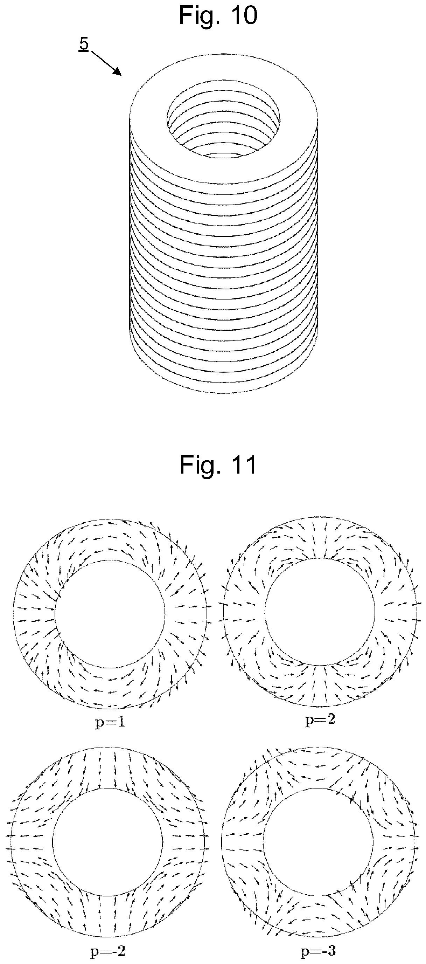

Figures 10 and 11 depict an example magnetic structure 5 that could be formed efficiently using embodiments of the present disclosure. The magnetic structure 5 comprises a Halbach-cylinder (as described in Halbach, K. (1980) "Design of permanent multipole magnets with oriented rare earth cobalt material" Nuclear instruments and methods, 169(1), 1-10) formed layer-by-layer. A Halbach cylinder is a magnetized cylinder composed of ferromagnetic material producing (in the idealized case) an intense magnetic field confined entirely within the cylinder with zero field outside. Example different distributions of magnetic orientations within each layer are depicted for four different layers (labelled p = 1, 2, -2, and -3) in Figure 11. In the example application, the distribution of magnetic orientations is controlled to achieve the magnetization of a Halbach-cylinder, which is defined in polar coordinates as *Mᵣ* = *M* cos *pϕ*; *M_{ϕ}* = *M* sin *pϕ.*

In a class of embodiments, a Halbach-cylinder is used as part of the method of manufacturing a magnetic structure. In such embodiments, the Halbach-cylinder may or may not itself have been formed using the method. The Halbach-cylinder applies the selected magnetic alignment to each of the plural portions of magnetic material as each portion passes through the alignment region 15 (before solidification of each portion). The Halbach-cylinder may be provided, for example, instead of, or in addition to, the permanent magnets 16 and 18 in the arrangement of Figures 8 and 9. In such a case, the Halbach-cylinder may be mounted on a rotatable assembly (such as the rotatable assembly 12 of Figures 8 and 9) such that rotation of the rotatable assembly causes rotation of the Halbach-cylinder, for example about a longitudinal axis of the Halbach-cylinder. The Halbach-cylinder may be positioned so that at least a portion of the Halbach-cylinder surrounds the alignment region 15, at least when viewed along the longitudinal axis of the Halbach-cylinder. In an embodiment, the Halbach-cylinder is arranged so that the longitudinal axis of the Halbach-cylinder passes through the alignment region 15. The rotation of the Halbach-cylinder thus causes a change in a direction of a magnetic field in the alignment region 15, thereby allowing the selected magnetic alignment to be varied as desired during the additive manufacture of the magnetic structure 5 to be manufactured.

Further embodiments are described by the following numbered clauses:
1. A method of manufacturing a magnetic structure, comprising:
   driving magnetic material in a liquid state through an outlet and onto a surface in an additive manufacturing process in which the magnetic material solidifies on the surface and progressively builds up the magnetic structure; and
   using a magnetic field to apply a selected magnetic alignment to each of plural portions of the magnetic material before the solidification of each portion of magnetic material, such that each portion of magnetic material solidifies with a respective selected magnetic alignment, wherein:
   the magnetic field is varied in direction or strength during the driving of the magnetic material through the outlet to apply corresponding different selected magnetic alignments to different portions of the magnetic material.
2. The method of clause 1, wherein the magnetic field comprises a pulsed magnetic field.
3. The method of clause 1 or 2, wherein the magnetic field is generated such that the region of free space in which the magnetic field is present and large enough to apply the selected magnetic alignment has a largest linear dimension of less than 5mm.
4. The method of any preceding clause, wherein:
   each portion of magnetic material is melted by heating before the portion of magnetic material is driven through the outlet; and
   the solidification of each portion of magnetic material occurs due to cooling of the portion of magnetic material.
5. The method of clause 4, wherein the method comprises receiving the portions of magnetic material together as a filament before the portions of magnetic material are melted, the filament having a diameter less than 5mm and a length of more than 1m.
6. The method of any of clauses 1-3, wherein:
   the magnetic material comprises a photosensitive liquid at room temperature and the solidification of each portion of magnetic material is driven by irradiation by electromagnetic radiation.
7. The method of any preceding clause, wherein the magnetic material comprises a magnetic component and a carrier medium.
8. The method of clause 7, wherein the magnetic component comprises particles having a saturation magnetization larger than 0.1 Tesla.
9. The method of clause 7 or 8, wherein the magnetic component comprises particles that are magnetically anisotropic.
10. The method of clause 7 or 8, wherein the magnetic component comprises particles that are magnetically anisotropic due to an effective crystalline anisotropy that prefers the magnetization to be aligned parallel to one axis.
11. The method of any of clauses 8-10, wherein the carrier medium comprises a polymer matrix.
12. The method of clause 11, wherein:
   each portion of magnetic material is melted by heating before the portion of magnetic material is driven through the outlet; and
   the heating is such that the polymer matrix reaches a temperature that is more than 10°C above a glass transition temperature of the polymer matrix.
13. The method of any preceding clause, wherein:
   the magnetic field used to apply the selected magnetic alignment is generated using a plurality of coils;
   each of the coils is configured to selectively contribute a magnetic field component to the magnetic field;
   at least two of the contributed magnetic field components are oriented differently relative to each other; and
   the selected magnetic alignment is changed between deposition of different portions of the magnetic material by changing relative strengths of the contributed magnetic field components.
14. The method of clause 13, wherein:
   each coil interacts with a magnetic core configured to direct magnetic flux generated by the coil through a common alignment region; and
   the selected magnetic alignment is applied to each portion of magnetic material as the portion of magnetic material passes through the common alignment region.
15. The method of clause 14, wherein at least two of the magnetic cores are separated from each other across the common alignment region by less than 5mm.
16. The method of any preceding clause, wherein:
   the selected magnetic alignment is applied to each portion of magnetic material as the portion of magnetic material passes through an alignment region; and
   the selected magnetic alignment is changed between deposition of different portions of the magnetic material by changing the position of one or more permanent magnets relative to the alignment region.
17. The method of clause 16, wherein the one or more permanent magnets comprise a Halbach-cylinder.
18. The method of clause 16 or 17, wherein the one or more permanent magnets are provided in a rotatable assembly and the changing of the position of the one or more permanent magnets relative to the alignment region is performed by rotating the one or more permanent magnets via the rotatable assembly.
19. The method of any of clauses 16-18, wherein the one or more permanent magnets comprises at least two permanent magnets that are separated from each other across the alignment region by less than 5mm.
20. The method of any preceding clause, wherein:
   the selected magnetic alignment is applied to each portion of the magnetic material as the portion of magnetic material passes through an alignment region; and
   the applied magnetic field is substantially perpendicular to a direction of travel of the portion of magnetic material through the alignment region.
21. The method of clause 20, wherein:
   the selected magnetic alignment is changed between deposition of different portions of the magnetic material by changing an orientation of the applied magnetic field between different orientations perpendicular to the direction of travel of each portion of the magnetic material through the alignment region.
22. An apparatus for manufacturing a magnetic structure, comprising:
   an ejection system configured to drive magnetic material in a liquid state through an outlet and onto a surface in an additive manufacturing process in which the magnetic material solidifies on the surface and progressively builds up the magnetic structure; and
   an alignment control system configured to using a magnetic field to apply a selected magnetic alignment to each of plural portions of the magnetic material before the solidification of each portion of magnetic material, such that each portion of magnetic material solidifies with a respective selected magnetic alignment, wherein:
      the alignment control system is configured such that the magnetic field is varied in direction or strength during the driving of the magnetic material through the outlet to apply corresponding different selected magnetic alignments to different portions of the magnetic material.
23. The apparatus of clause 22, wherein:
   the alignment control system comprises a plurality of coils;
   each of the coils is configured to selectively contribute a magnetic field component to the magnetic field used to apply the selected magnetic alignment;
   at least two of the contributed magnetic field components are oriented differently relative to each other; and
   the apparatus is configured to change the selected magnetic alignment between deposition of different portions of the magnetic material by changing relative strengths of the contributed magnetic field components.
24. The apparatus of clause 23, wherein:
   each coil interacts with a magnetic core configured to direct magnetic flux generated by the coil through a common alignment region; and
   the selected magnetic alignment is applied to each portion of magnetic material as the portion of magnetic material passes through the common alignment region.
25. The apparatus of any of clauses 22-24, wherein:
   the alignment control system comprises one or more permanent magnets;
   the apparatus is configured such that the selected magnetic alignment is applied to each portion of magnetic material as the portion of magnetic material passes through an alignment region; and
   the apparatus is configured to change the selected magnetic alignment between deposition of different portions of the magnetic material by changing the position of one or more of the permanent magnets relative to the alignment region.
26. The apparatus of clause 25, wherein the one or more permanent magnets comprise a Halbach-cylinder.
27. The apparatus of clause 25 or 26, wherein the one or more permanent magnets are provided in a rotatable assembly and the changing of the position of the one or more permanent magnets relative to the alignment region is performed by rotating the one or more permanent magnets via the rotatable assembly.
28. The apparatus of any of clauses 22-27, wherein the alignment control system is configured such that:
   the selected magnetic alignment is applied to each portion of the magnetic material as the portion of magnetic material passes through an alignment region; and
   the applied magnetic field is substantially perpendicular to a direction of travel of the portion of magnetic material through the alignment region.
29. The apparatus of clause 28, wherein the selected magnetic alignment is changed between deposition of different portions of the magnetic material by changing an orientation of the applied magnetic field between different orientations perpendicular to the direction of travel of each portion of the magnetic material through the alignment region.

## Claims

1. A method of manufacturing a magnetic structure, comprising:
driving magnetic material in a liquid state through an outlet and onto a surface in an additive manufacturing process in which the magnetic material solidifies on the surface and progressively builds up the magnetic structure; and
using a magnetic field to apply a selected magnetic alignment to each of plural portions of the magnetic material before the solidification of each portion of magnetic material, such that each portion of magnetic material solidifies with a respective selected magnetic alignment, wherein:
the magnetic field is varied in direction or strength during the driving of the magnetic material through the outlet to apply corresponding different selected magnetic alignments to different portions of the magnetic material.

2. The method of claim 1, wherein the magnetic field comprises a pulsed magnetic field.

3. The method of claim 1 or 2, wherein the magnetic field is generated such that the region of free space in which the magnetic field is present and large enough to apply the selected magnetic alignment has a largest linear dimension of less than 5mm.

4. The method of any preceding claim, wherein:
each portion of magnetic material is melted by heating before the portion of magnetic material is driven through the outlet; and
the solidification of each portion of magnetic material occurs due to cooling of the portion of magnetic material.

5. The method of claim 4, wherein the method comprises receiving the portions of magnetic material together as a filament before the portions of magnetic material are melted, the filament having a diameter of less than 5mm and a length of more than 1m.

6. The method of any preceding claim, wherein the magnetic material comprises a magnetic component and a carrier medium.

7. The method of claim 6, wherein the magnetic component comprises particles that are magnetically anisotropic.

8. The method of claim 6 or 7, wherein:
the carrier medium comprises a polymer matrix;
each portion of magnetic material is melted by heating before the portion of magnetic material is driven through the outlet; and
the heating is such that the polymer matrix reaches a temperature that is more than 10°C above a glass transition temperature of the polymer matrix.

9. The method of any preceding claim, wherein:
the magnetic field used to apply the selected magnetic alignment is generated using a plurality of coils;
each of the coils is configured to selectively contribute a magnetic field component to the magnetic field;
at least two of the contributed magnetic field components are oriented differently relative to each other; and
the selected magnetic alignment is changed between deposition of different portions of the magnetic material by changing relative strengths of the contributed magnetic field components.

10. The method of claim 9, wherein:
each coil interacts with a magnetic core configured to direct magnetic flux generated by the coil through a common alignment region; and
the selected magnetic alignment is applied to each portion of magnetic material as the portion of magnetic material passes through the common alignment region.

11. The method of any preceding claim, wherein:
the selected magnetic alignment is applied to each portion of magnetic material as the portion of magnetic material passes through an alignment region; and
the selected magnetic alignment is changed between deposition of different portions of the magnetic material by changing the position of one or more permanent magnets relative to the alignment region.

12. The method of claim 11, wherein the one or more permanent magnets comprise a Halbach-cylinder.

13. The method of claim 11 or 12, wherein the one or more permanent magnets are provided in a rotatable assembly and the changing of the position of the one or more permanent magnets relative to the alignment region is performed by rotating the one or more permanent magnets via the rotatable assembly.

14. The method of any preceding claim, wherein:
the selected magnetic alignment is applied to each portion of the magnetic material as the portion of magnetic material passes through an alignment region;
the applied magnetic field is substantially perpendicular to a direction of travel of the portion of magnetic material through the alignment region; and
the selected magnetic alignment is changed between deposition of different portions of the magnetic material by changing an orientation of the applied magnetic field between different orientations perpendicular to the direction of travel of each portion of the magnetic material through the alignment region.

15. An apparatus for manufacturing a magnetic structure, comprising:
an ejection system configured to drive magnetic material in a liquid state through an outlet and onto a surface in an additive manufacturing process in which the magnetic material solidifies on the surface and progressively builds up the magnetic structure; and
an alignment control system configured to using a magnetic field to apply a selected magnetic alignment to each of plural portions of the magnetic material before the solidification of each portion of magnetic material, such that each portion of magnetic material solidifies with a respective selected magnetic alignment, wherein:
the alignment control system is configured such that the magnetic field is varied in direction or strength during the driving of the magnetic material through the outlet to apply corresponding different selected magnetic alignments to different portions of the magnetic material.
